# EUROPÄISCHE PATENTSCHRIFT

(11) **EP 0 654 576 B1**
(45) Veröffentlichungstag und Bekanntmachung des Hinweises auf die Patenterteilung: **18.03.1998**
(21) Anmeldenummer: 94117166.2
(22) Anmeldetag: 31.10.1994
(51) Int. Cl.: E05F 15/00, F16P 3/12, H01H 3/14, H01R 4/24, H01R 25/16

(54) **Nadelkontaktelement einer Sicherheitskontaktschiene**
Needle contact element of a safety contact edge
Aiguille de contact d'un rail de contact de sécurité

(30) Priorität: 22.11.1993 DE 4339688
(43) Veröffentlichungstag der Anmeldung: 24.05.1995
(73) Patentinhaber: Beckhausen, Karlheinz, 50931 Köln (DE)
(72) Erfinder: Beckhausen, Karlheinz, 50931 Köln (DE)
(74) Vertreter: Nau, Walter, Dipl.-Ing.

(56) Entgegenhaltungen:
- EP-A- 0 383 671
- DE-A- 4 135 890

## Beschreibung

Die Erfindung betrifft Nadelkontaktelemente einer Sicherheitskontaktschiene für kraftbetätigte Anlagen sowie zur Absicherung von Maschinen oder Räumen mit einem ersten und einem zweiten Abschnitt, die isoliert voneinander angeordnete elektrisch leitende Zonen aufweisen, in die in die eine durchgehende elektrisch leitende Litze eingelassen ist und wobei in die Zonen beziehungsweise Litze die Nadelkontaktelemente einsetzbar sind, die bei einer durch Verformung der Sicherheitskontaktschiene bewirkten gegenseitigen Berührung einen Schaltimpuls auslösen, der über mit den Zonen verbundenen Schaltleitungen einer Auswerteinheit zuführbar ist.

Ein gattungsgemäßes Nadelkontaktelement ist beispielsweise aus der DE-OS 41 35 890 bekannt. In dieser Druckschrift ist ein Nadelkontaktelement beschrieben, das in die elektrisch leitenden Zonen einer Sicherheitskontaktschiene einsetzbar ist. Dieses Nadelkontaktelement weist einen Nadelkontaktkopf auf, an dem mittels einer Schraube eine Schaltleitung befestigbar ist. Dabei hat sich dieses Nadelkontaktelement als durchaus zuverlässig erwiesen. Es ist aber nur zum Befestigen von Schaltleitungen geeignet. Diese Sicherheitskontaktschiene ist im übrigen beispielsweise bei kraftbetätigten Anlagen, wie Rolltoren, Rollgittern usw. wie auch für Hebe-, Arbeitsbühnen und dergleichen sowie zur Absicherung von Maschinen oder Räumen, zum Beispiel als Trittsicherung, verwendbar. Die Sicherheitskontaktschiene wird üblicherweise als Meterware in Form von Sicherheitskontaktschienenelementen hergestellt.

Der Erfindung liegt die Aufgabe zugrunde, Nadelkontaktelemente einer Sicherheitskontaktschiene bereitzustellen, die im Gegensatz zum Stand der Technik universell verwendbar sind. Weiterhin liegt der Erfindung die Aufgabe zugrunde, konkrete Verwendungen für derartige erfindungsgemäße Nadelkontaktelemente anzugeben.

Diese Aufgabe wird durch die Merkmale des kennzeichnenden Teils von Anspruch 1 gelöst. Dazu ist das Nadelkontaktelement als Nadelkontaktstift mit je einer Nadelspitze an den Enden ausgebildet, wobei das Nadelkontaktelement als Nadelkontaktstift mit je einer Nadelspitze an den Enden ausgebildet ist, wobei der Nadelkontaktstift angenähert mittig einen umlaufenden Ringsteg aufweist und wobei die Litze in einem die Litze aufnehmenden Kanal in den elektrisch leitenden Zonen verschiebbar und/oder herausnehmbar ist. Dabei ist ein derartiger Nadelkontaktstift einfach zu fertigen und insbesondere zum Verbinden von Sicherheitskontaktschienenelementen zu verwenden. Dazu ist das Nadelkontaktelement in die elektrisch leitenden Zonen der zu verbindenden Sicherheitskontaktschienenelemente einsetzbar. Dies geschieht in der Form, daß in die beiden elektrisch leitenden Zonen eines ersten Sicherheitskontaktschienenelementes je ein Nadelkontaktstift etwa zur Hälfte eingeschoben wird und diese mit den gegenüberliegenden Nadelspitzen in das zweite Sicherheitskontaktschienenelement eingeschoben werden. Dabei können die Sicherheitskontaktschienenelemente beispielsweise durch Verkleben zusätzlich miteinander verbunden werden. Durch die eingesetzen Nadelkontaktstifte ist aber in jedem Fall eine genaue Positionierung der beiden Sicherheitskontaktschienenelemente zueinander gewährleistet und darüberhinaus eine zuverlässige Verbindung der elektrisch leitenden Zonen gewährleistet. Ein Ausfall der Schaltimpulsübermittlung durch unzureichend miteinander verbundene Sicherheitskontaktschienenelemente ist damit quasi ausgeschlossen.

Der Nadelkontaktstift weist angenähert mittig einen umlaufenden Ringsteg auf. Dieser Ringsteg legt beim Einsetzen des Nadelkontaktstiftes in eine elektrisch leitende Zone die Einstecktiefe fest und verhindert darüberhinaus beim Aufschieben auf ein zweites Sicherheitskontaktschienenelement, daß der Nadel kontaktstift gänzlich in das erste Sicherheitskontaktschienenelement eingeschoben wird und dadurch nur mangelhafte Verbindung der beiden elektrisch leitenden Zonen und der Sicherheitskontaktschienenelemente überhaupt erfolgt. In die Zonen ist eine durchgehende elektrisch leitende Litze eingelassen. Diese Litze dient zur sicheren Übertragung der elektrischen Schaltimpulse auch über lange Enffemungen innerhalb der Sicherheitskontaktschienenelemente. Darüberhinaus gewährleistet die Litze auch bei kleineren Beschädigungen der elektrisch leitenden Zonen beispielsweise durch eingedrungene Gegenstände oder durch wiederholtes Auftreffen auf scharfkantige Gegenstände, daß auch bei weitgehend durchtrennten elektrisch leitenden Zonen eine sichere Funktion der Sicherheitskontaktschiene gewährleistet ist.

Weiterhin ist die Litze in dem die Litze aufnehmenden Kanal in den Zonen verschiebbar und/oder herausnehmbar. Ein Verschieben der Litze ist insbesondere zum Einsetzen von Nadelkontaktstiften, beispielsweise zum Verbinden von Sicherheitskontaktschienenelementen, vorteilhaft. In diesem Fall wird die Litze um einen geringen Betrag, der beispielsweise der halben Länge des einzuschiebenden Nadelkontaktstiftes entspricht, zurückgeschoben, so daß der Nadelkontaktstift leicht eingeführt werden kann und mit einer Teillänge eine darüberhinaus gute elektrische Verbindung mit der Litze eingeht. Dieses Zurückschieben kann im übrigen in der Art erfolgen, daß das Sicherheitskontaktschienenelement in seinem Endbereich durch Auseinanderziehen geringfügig elastisch gelängt wird, wodurch die Litze in den Kanälen der elektrisch leitenden Zone geringfügig zurückbleibt. Wird die Längung des Sicherheitskontaktschienenelements wieder aufgehoben, so verbleibt die Litze in ihrer Position, da die einzelnen feinen Drähte der Litze sich um das zurückgehende Längenmaß stauchen. Alternativ ist die Litze aus dem Kanal gänzlich herausnehmbar. Die Herausnahme erfolgt insbesondere zur Herstellung von insbesondere Winkelstücken für die Sicherheitskontaktschiene. Dazu werden von einem Sicherheitskontaktschienenelement beispielsweise zwei kurze Teillängen abgeschnitten, die beispielsweise zur Erzeugung eines 90° Winkelstückes an ihren Enden mit 45°-Schnitten versehen werden, um zusammengesetzt den 90°-Winkel zu erzeugen. Aus diesen kurzen Sicherheitskontaktschienenabschnitten wird die Litze herausgenommen und stattdessen von der abgeschrägten Seite her Nadelkontaktstifte durch die Kanäle durchgeschoben. Dabei weisen die Nadelkontaktstifte eine solche Länge auf, daß sie noch um einen Teilbereich aus den Abschnitten herausragen und die Nadelkontaktstifte sind darüberhinaus so gebogen, daß sie den entsprechenden Winkel einschließen, in dem angegebenen Beispielsfall also 90°. Die Sicherheitskontaktschienenabschnitte werden an ihren Stoßkanten zusätzlich verklebt. Im übrigen bieten diese so gefertigten Winkelstücke den Vorteil auf, daß auch in diesen Eckbereichen Schaltimpulse ausgelöst werden, wenn die Sicherheitskontaktschiene in diesem Bereich auf ein Hindernis trifft. Diese durch die erfindungsgemäße Ausgestaltung ermöglichte Schalffunktion in diesen Winkelstücken stellt gegenüber dem Stand der Technik, bei dem eine derartige Schaltfunktion nicht gegeben war, eine wesentliche Verbesserung dar.

In Weiterbildung der Erfindung ist der Nadelkontaktstift mit der Nadelspitze aus einem Haltestück herausragend in das Haltestück einsetzbar ist. Ein derartiges Nadelkontaktelement wird inbesondere zur Herstellung eines Endstückes für eine Sicherheitskontaktschiene und/oder eines elektrischen Funktionsteils einer Sicherheitskontaktschiene verwendet. Dazu sind in möglichen Verwendungen die Nadelkontaktstifte in ein Haltestück in der Form eingesetzt, daß die Nadelspitzen mit einem Teil des Nadelkontaktstiftes aus dem Haltestück herausragen und so in bzw. an dem Haltestück angeordnet sind, daß sie den elektrisch leitenden Zonen der Sicherheitskontaktschienenelemente gegenüberliegen. Das andere Ende des jeweiligen Nadelkontaktstiftes ragt zumindest gerinfügig aus der gegenüberliegenden Seite des Haltestücks heraus und an diesen herausragenden Teil der Nadelkontaktstifte können dann alternativ oder in Kombination Anschlußkabel beispielsweise angelötet oder angeheftet werden oder aber elektrische bzw. elektronische Bauteile angeschlossen werden. So kann beispielsweise eine Sperrdiode oder ein Widerstand, die/der für bestimmte Schaltanwendungen benötigt wird, angeschlossen werden. Das Haltestück ist vorteilhaft symmetrisch ausgebildet und weist zwei vorgefertigte Öffnungen auf, in die die Nadelkontaktstifte eingesetzt werden. Dabei sind vorteilhaft insgesamt drei Öffnungen vorgesehen, so daß das Haltestück sowohl für linksseitigen als auch rechtsseitigen Anbau an Sicherheitskontaktschienenelemente geeignet ist. Weiterhin ist eine Abdeckkappe vorgesehen, die mit dem Haltestück verbindbar ist und die eine Außenkontur aufweist, die der Außenkontur eines Sicherheitskontaktschienenelementes entspricht. Dieses Endstück ist entweder als Anschlußendstück ausgebildet und weist dann eine Öffnung auf, durch die das Anschlußkabel in die Abdeckkappe einführbar ist. Dabei kann vorteilhaft vorgesehen sein, die Öffnung für das Anschlußkabel in der Abdeckkappe durch beispielsweise eine eingelassene Vertiefung anzudeuten und festzulegen und die Öffnung bei Bedarf auszubrechen oder auszuschneiden. Damit ist die Teilevielfalt weiter reduziert.

In Weiterbildung der Erfindung schließen die Nadelkontaktspitzen je einen Winkel von 50° bis 90°, vorzugsweise von 70° ein. Derartig ausgebildete Nadelspitzen ermöglichen ein problemloses Einstecken des Nadelkontaktstiftes in die elektrisch leitenden Zonen. Insbesondere beim Einstecken in in die Zonen eingelassene elektrischen Leiter gewährleistet die erfindungsgemäß ausgebildete Nadelspitze, daß der Nadelkontaktstift genau entlang des Leiters bzw. innerhalb des Leiters geführt wird und nicht in die umgebende elektrisch leitende Zone abgleitet.

In Weiterbildung der Erfindung läuft der Nadelkontaktstift beidseitig des Ringsteges zu den Nadelkontaktspitzen konisch zu. Diese Konizität ermöglicht einen sehr sicheren Halt des Nadelkontaktelementes in den elektrisch leitenden Zonen oder in bzw. an der in den elektrisch leitenden Zonen eingelassenen Litze.

In Weiterbildung der Erfindung ist der Nadelkontaktstift ablängbar. Somit lassen sich Nadelkontaktstifte zum Einsetzen in ein Haltestück beispielsweise eines Anschlußendstückes herstellen.

In Weiterbildung der Erfindung ist der Durchmesser der Nadelkontaktstifte und der Litze angenähert gleich. Dadurch lassen sich die Nadelkontaktstifte problemlos in die die Litze aufnehmenden Kanäle der elektrisch leitenden Zone einschieben.

In Weiterbildung ist der Nadelkontaktstift aus einem korrosionsbeständigem Material gefertigt. Dies kann beispielsweise Nirosta oder V2A oder V4A sein. Damit ist auch beim Eindringen von Feuchtigkeit, beispielsweise durch Beschädigungen der Sicherheitskontaktschiene nach wie vor eine sichere Funktion sichergestellt.

Sämtliche Bauteile mit Nadelkontaktelementen (Winkelkontaktstücke, Sicherheitskontaktschienenelemente sowie Anschlußstücke in unterschiedlicher Ausbildung) sind im übrigen als elektrische Steckverbindung verwendbar.

Weitere Ausgestaltungen der Erfindung sind den Zeichnungsbeschreibung zu entnehmen, in der in der Zeichnung dargestellte Ausführungsbeispiele der Erfindung näher beschrieben sind.
Es zeigen:
- Fig. 1: einen Nadelkontaktstift,
- Fig. 2: eine stirnseitige Draufsicht auf ein Sicherheitskontaktschienenelement,
- Fig. 3: ein Winkelstück mit einem seitig angeordneten Träger,
- Fig. 4: ein Winkelstück mit einem stirnseitig angeordneten Träger,
- Fig. 5: ein Anschlußendstück und
- Fig. 6: zwei Sicherheitskontaktschienenelemente, die mit Nadelkontaktstiften zusammensetzbar sind.

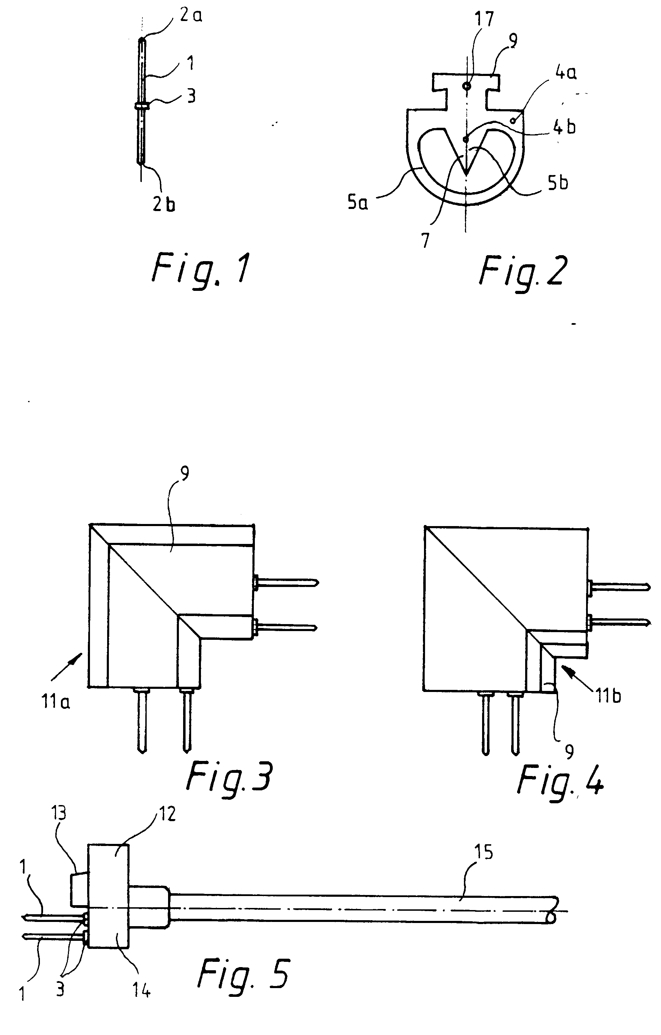

Der Nadelkontaktstift 1 nach Fig. 1 weist zwei Nadelspitzen 2a, 2b auf, die einander gegenüber liegen. In der Mitte des Nadelkontaktstiftes 1 ist ein umlaufender Ringsteg 3 angeordnet. Dieser Ringsteg 3 stellt einen Anschlag dar, bis zu dem der Na delkontaktstift 1 in einen Kanal 4a, 4b einer elektrisch leitenden Zone 5a, 5b (Fig. 2) eingeschiebbar ist. Die Sicherheitskontaktschiene weist im übrigen ein Gummihohlprofil 6 auf, wobei im Inneren des Gummihohlprofils 6 eine aus elektrisch leitendem Gummi hergestellte Rippe 7 angebracht ist, die mit ihrer Grundfläche an dem elektrisch nicht leitenden Rücken 8 des Gummihohlprofils 6 gegenüberliegend einem Träger 9 befestigt ist. Der Träger 9 ist T-förmig ausgebildet und beispielsweise in einer entsprechenden Ausnehmung eines Rolltores einschiebbar und befestigbar. Gegenüberliegend dem Träger 9 schließt sich an den Rücken 8 eine Wandung 10 an, die das eigentliche Gummihohlprofil 6 bildet und beispielsweise durch die Einlagerung von Graphit elektrisch leitend ist. Ein schneidenförmig ausgebildeter Bereich der Rippe 7 weist zu der elektrisch leitenden Wandung 10. Bei Auftreffen der Wandung 10 auf ein Hindernis verformt sich die Wandung 10 soweit, bis sie auf den schneidenförmig ausgebildeten Bereich der Rippe 7 auftrifft und durch das Zusammentreffen von zwei elektrisch leitenden Zonen ein Schaltimpuls ausgelöst wird. Dieser Schaltimpuls ist über Schaltleitungen (Fig. 5) zu einer Auswerteinrichtung weiterleitbar, wobei die Auswerteinrichtung beispielsweise das Abstoppen der Antriebsmotoren des Rollgitters veranlaßt. In die elektrisch leitenden Zonen 5a, 5b sind - wie ausgeführt - Kanäle 4a, 4b eingelassen, in die eine elektrisch leitenden Litze eingelassen ist. Diese elektrisch leitende Litze dient zur sicheren Schaltimpulsübertragung auch über längere Enfernungen innerhalb der Sicherheitskontaktschiene. In die Kanäle 4a, 4b sind darüberhinaus die Nadelkontaktstifte 1 mit ihren Nadelspitzen 2a bis zu dem Ringsteg 3 einschiebbar. In die sich über die gesamte Länge eines Sicherheitskontaktschienenelementes erstreckende Ausnehmung 17 kann bei Bedarf ein Verstärkungs- oder Haltedraht eingezogen oder eingelassen sein.

Die Fig. 3 und 4 zeigen Winkelstücke 11a, 11b einer Sicherheitskontaktschiene, die sich prinzipiell nur durch die Anordnung des Trägers 9 unterscheiden. Bei dem Winkelkontaktstück 11a nach Fig. 3 ist der Träger 9 stimseitig angeordnet, während bei dem Winkelstück 11b nach Fig. 4 der Träger 9 seitlich angeordnet ist. Dadurch lassen sich je nach gewünschtem Verwendungszweck unterschiedliche Anordnungen von der Sicherheitskontaktschiene im Eckbereich von abzusichernden Gegenständen herstellen.

Das Anschlußendstück 12, das als Anschlußstecker ausgebildet ist, nach Fig. 5 weist ein Haltestück 13 auf, in das Nadelkontaktstifte 1 eingesetzt sind. Diese Nadelkontaktstifte können beispielsweise durch Ablängen des Nadelkontaktstiftes 1 aus Fig. 1 leicht hergestellt werden. Das Haltestück 13 ist auf der Seite, auf der die Nadelkontaktstifte 1 nicht oder nur geringfügig herausragen mit einer Abdeckkappe 14 versehen, aus der das Anschlußkabel 15 herausragt. Das Anschlußkabel 15 ist durch eine abdichtbare Öffnung in die Abdeckkappe 14 eingeführt und innerhalb der Abdeckkappe 14 sind die in dem Anschlußkabel 15 befindlichen Leitungen mit den Nadelkontaktstiften 1 elektrisch leitend verbunden. In gleicher Weise können in der Abdeckkappe 14, die in einer alternativen Ausführung auch ohne Öffnung für ein Anschlußkabel 15 ausgebildet sein kann, elektrische Funktionsteile, beispielsweise eine Sperrdiode oder ein Widerstand angeordnet sein, die ebenfalls mit den Nadelkontaktstiften 1 verbindbar sind.

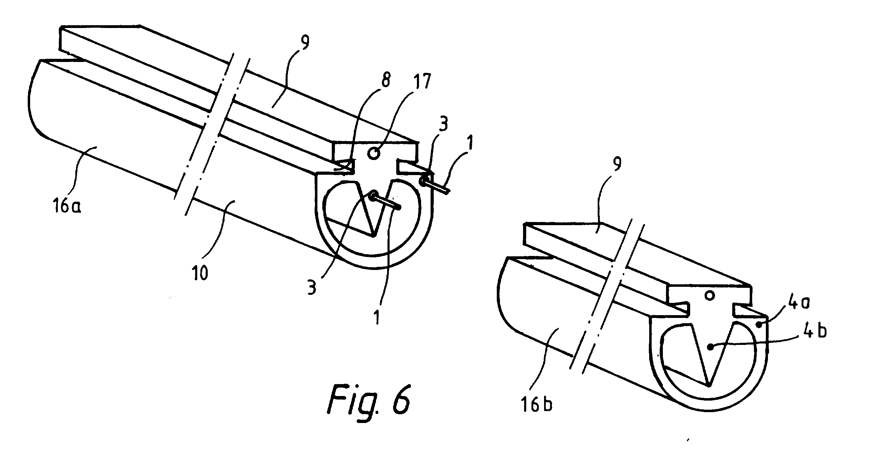

In Fig. 6 sind zwei Sicherheitskontaktschienenelemente 16a, 16b dargestellt, wobei in das Sicherheitskontaktschienenelement 16a die Nadelkontaktstifte 1 eingesetzt sind. Das zu verbindende Sicherheitskontaktschienenelement 16b wird nunmehr auf die Nadelkontaktstifte 1 aufgeschoben, wobei die Nadelkontaktstifte 1 in die nicht sichtbaren Kanäle 4a, 4b des Sicherheitskontaktschienenelements 16b eingeführt werden. Zum dichten Verbinden der Sicherheitskontaktschienenelemente 16a, 16b können diese an der zusammenstoßenden Fuge miteinander verklebt werden.

Im übrigen weisen die Nadelkontaktstifte 1 eine Länge von ca. 30 mm und einen Durchmesser von ca. 1,5 mm auf und laufen konisch zum Ringsteg 3 zu. Im Bereich des Ringsteges 3 weisen sie einen Durchmesser von ca. 2,5 mm auf.

## Patentansprüche

1. Nadelkontaktelement einer Sicherheitskontaktschiene für kraftbetätigte Anlagen sowie zur Absicherung von Maschinen oder Räumen mit einem ersten und einem zweiten Abschnitt, die isoliert voneinander angeordnete elektrisch leitende Zonen (5a, 5b) aufweisen, in die in die eine durchgehende elektrisch leitende Litze eingelassen ist und wobei in die Zonen (5a, 5b) beziehungsweise Litze die Nadelkontaktelemente einsetzbar sind, die bei einer durch Verformung der Sicherheitskontaktschiene bewirkten gegenseitigen Berührung einen Schaltimpuls auslösen, der über mit den Zonen (5a, 5b) verbundenen Schaltleitungen einer Auswerteinheit zuführbar ist,
**dadurch gekennzeichnet**, daß das Nadelkontaktelement als Nadelkontaktstift (1) mit je einer Nadelspitze (2a, 2b) an den Enden ausgebildet ist, daß der Nadelkontaktstift (1) angenähert mittig einen umlaufenden Ringsteg (3) aufweist und daß die Litze in einem die Litze aufnehmenden Kanal (4a, 4b) in den elektrisch leitenden Zonen (5a, 5b) verschiebbar und/oder herausnehmbar ist.

2. Nadelkontaktelement nach Anspruch 1,
**dadurch gekennzeichnet**, daß der Nadelkontaktstift (1) mit der Nadelspitze (2a) aus einem Haltestück (13) herausragend in das Haltestück (13) einsetzbar ist.

3. Nadelkontaktelement nach Anspruch 1 oder 2,
**dadurch gekennzeichnet**, daß der Nadelkontaktstift (1) ablängbar ist.

4. Nadelkontaktelement nach einem der vorherigen Ansprüche,
**dadurch gekennzeichnet**, daß die Nadelkontaktspitzen (2a, 2b) je einen Winkel von 50° bis 90°, vorzugsweise 70° einschließen.

5. Nadelkontaktelement nach einem der vorherigen Ansprüche,
dadurch gekennzeichnet, daß der Nadelkontaktstift (1) beidseitig des Ringsteges (3) zu den Nadelkontaktspitzen (2a, 2b) konisch zuläuft.

6. Nadelkontaktelement nach einem der vorherigen Ansprüche,
**dadurch gekennzeichnet**, daß der Durchmesser des Nadelkontaktstiftes (1) und der Litze annähernd gleich ist.

7. Nadelkontaktelement nach einem der vorherigen Ansprüche,
**dadurch gekennzeichnet**, daß der Nadelkontaktstift (1) aus einem korrosionsbeständigem Material gefertigt ist.

8. Verwendung eines Nadelkontaktelements einer Sicherheitskontaktschiene nach einem der vorherigen Ansprüche,
**dadurch gekennzeichnet**, daß Nadelkontaktstifte (1) zur Verbindung von Sicherheitskontaktschienenelementen (16a, 16b) in die elektrisch leitenden Zonen (5a, 5b) der zu verbindenden Sicherheitskontaktschienenelemente (16a, 16b) einsetzbar sind.

9. Verwendung eines Nadelkontaktelements einer Sicherheitskontaktschiene nach einem der vorherigen Ansprüche,
**dadurch gekennzeichnet**, daß Nadelkontaktstifte (1) zur Herstellung eines Winkelstückes (11a, 11b) einer Sicherheitskontaktschiene durch die leitenden Zonen (5a, 5b) der zur Erzeugung des Winkels zu verbindenden Sicherheitskontaktschienenabschnitte durchschiebbar sind und die Nadelkontaktstifte (1) über eine Teillänge aus den zu der Eintrittsstelle gegenüberliegenden Austrittsstellen aus dem Sicherheitskontaktschienenabschnitt austreten.

10. Verwendung eines Nadelkontaktelements einer Sicherheitskontaktschiene nach einem der vorherigen Ansprüche,
**dadurch gekennzeichnet**, daß das Haltestück (13) mit den Nadelkontaktstiften (1) zur Herstellung eines Anschlußendstückes (12) mit einem Anschlußkabel (15) und einer Abdeckplatte (14) verbindbar ist.

11. Verwendung eines Nadelkontaktelements einer Sicherheitskontaktschiene nach einem der vorherigen Ansprüche,
**dadurch gekennzeichnet**, daß das Haltestück (13) mit den Nadelkontaktstiften (1) zur Herstellung eines elektrischen Funtkionsteils mit einem elektrischen Bauteil versehbar ist, das an den Nadelkontaktstiften (1) elektrisch leitend befestigbar ist.

## Claims

1. A needle contact element of a safety contact rail for power-actuated plant and for safeguarding machines or areas, with a first and a second section which have electrically-conducting zones arranged insulated from one another through which an electrically-conducting litz wire is fully inserted, wherein the needle contact elements can be inserted into the zones or into the litz wires and trigger a switching pulse through the mutual contact brought about by deformation of the safety contact rail, with the said switching pulse transmissible to an evaluation unit via switching lines connected to the zones
**characterised in that** the needle contact element is a needle contact pin (1) with a needle tip (2a, 2b) at either end, that the needle contact pin (1) has a circumferential annular web (3) arranged very nearly centrally and that the litz wires can be displaced within and/or withdrawn from a channel (4a, 4b) accommodating the litz wire in the electrically-conducting zones (5a, 5b).

2. A needle contact element according to claim 1
**characterised in that** the needle contact pin (1) can be inserted in the retaining section (13) through the needle tip (2a) projecting out of a retaining section (13).

3. A needle contact element according to claim 1 or 2
**characterised in that** the needle contact pin (1) can be cut to length.

4. A needle contact element according to one of the preceding claims
**characterised in that** the needle contact tips (2a, 2b) each subtend an angle of 50° to 90°, and preferably 70°.

5. A needle contact element according to one of the preceding claims
**characterised in that** the needle contact pin (1) tapers conically to the needle contact tips (2a, 2b) on both sides of the annular web (3).

6. A needle contact element according to one of the preceding claims
**characterised in that** the diameter of the needle contact pin (1) ) and the litz wire is very nearly the same.

7. A needle contact element according to one of the preceding claims
**characterised in that** the needle contact pin (1) is manufactured from a corrosion-resistant material.

8. The use of a needle contact element of a safety contact rail according to one of the preceding claims,
**characterised in that** needle contact pins (1) for connection of safety contact rail elements (16a, 16b) can be inserted in the electrically-conducting zones (5a, 5b) of the safety contact rail elements (16a, 16b) to be joined together.

9. The use of a needle contact element of a safety contact rail according to one of the preceding claims,
**characterised in that** needle contact pins (1) for the manufacture of an angular section (11a, 11b) of a safety contact rail can be pushed through the conducting zones (5a, 5b) of the safety contact rail sections to be joined together to generate the angle and the needle contact pins (1) ) project over a partial length out of the exit points from the safety contact rail section lying opposite the entry point.

10. The use of a needle contact element of a safety contact rail according to one of the preceding claims,
**characterised in that** the retaining section (13) with the needle contact pins (1) can be joined to a connecting cable (15) and a cover plate (14) to yield a connecting end section (12).

11. The use of a needle contact element of a safety contact rail according to one of the preceding claims,
**characterised in that** the retaining section (13) with the needle contact pins (1) ) are provided with an electrical component which can be secured to the needle contact pins (1) in an electrically-conducting manner to yield an electrical functional part.

## Revendications

1. Elément de contact à aiguille d'un rail à contact de sécurité pour installations actionnées par une source externe d'énergie pour sécuriser des machines ou des espaces, rail comportant une première et une seconde partie présentant des zones (5a, 5b) conductrices de l'électricité, isolées les unes des autres et dans lesquelles est encastré un cordon conducteur continu, les éléments de contact à aiguille pouvant être introduits dans les zones (5a, 5b) et dans le cordon et, par leur contact réciproque résultant de la déformation du rail à contact de sécurité, déclencher une impulsion de commutation transmise à une unité d'exploitation par des conducteurs reliés aux zones (5a, 5b),
caractérisé en ce que
l'élément de contact à aiguille est constitué d'une broche de contact à aiguille (1) présentant une pointe d'aiguille (2a, 2b) à ses extrémités, la broche (1) portant à peu près en son milieu et sur sa périphérie une garniture annulaire, tandis que le cordon peut être déplacé et/ou retiré par coulissement à l'intérieur d'un canal (4a, 4b) constituant le logement du cordon dans les zones conductrices (5a, 5b).

2. Elément de contact à aiguille selon la revendication 1,
caractérisé en ce que
la broche de contact à aiguille (1) peut être insérée dans la pièce de maintien (13), en saillie par rapport à elle, avec une pointe d'aiguille (2a).

3. Elément de contact selon la revendication 1 ou 2,
caractérisé en ce que
la broche de contact à aiguille (1) peut être coupée à longueur.

4. Elément de contact selon une des revendications précédentes,
caractérisé en ce que
les pointes de contact des aiguilles (2a, 2b) présentent chacune un angle de 50 à 90°, de préférence 70°.

5. Elément de contact selon une des revendications précédentes,
caractérisé en ce que
la broche de contact (1), de part et d'autre de la garniture annulaire (3), s'amincit en cône en direction des pointes d'aiguille (2a, 2b).

6. Elément de contact selon une des revendication précédentes,
caractérisé en ce que
les diamètres de la broche de contact (1) et du cordon sont sensiblement égaux.

7. Elément de contact selon une des revendication précédentes,
caractérisé en ce que
la broche de contact (1) est fabriquée d'un matériau résistant à la corrosion.

8. Utilisation d'un élément de contact d'un rail de sécurité selon une des revendications précédentes,
caractérisée en ce que
des broches de contact (1), pour assurer la liaison des éléments du rail de sécurité (16a, 16b), peuvent être montées dans les zones conductrices (5a, 5b) de ces éléments.

9. Utilisation d'un élément de contact à aiguille d'un rail à contact de sécurité selon une des revendications précédentes,
caractérisée en ce que
des broches de contact à aiguille (1), pour réaliser une pièce d'angle (11a, 11b) d'un rail de contact sont introduites par coulissement dans les zones conductrices (5a, 5b) des parties de rail de sécurité à relier pour former la pièce d'angle, les broches de contact à aiguille (1) dépassant d'une petite longueur les sorties, situées en regard des entrées, de la partie de rail de sécurité correspondante.

10. Utilisation d'un élément de contact à aiguille d'un rail à contact de sécurité selon une des revendications précédentes,
caractérisée en ce que
la pièce de maintien (13) équipée de broches de contact (1), peut être reliée à un câble de raccordement (15) et à une plaque de couverture (14) de manière à réaliser une pièce de raccordement (12).

11. Utilisation d'un élément de contact à aiguille d'un rail à contact de sécurité selon une des revendications précédentes,
caractérisée en ce que
la pièce de maintien (13) équipée de broches de contact (1) peut recevoir un composant électrique fixé avec liaison électrique sur les broches (1), de manière à réaliser une pièce électrique fonctionnelle.
